# FASCICULE DE BREVET EUROPEEN

(11) **EP 3 074 249 B1**
(45) Date de publication et mention de la délivrance du brevet: **02.01.2019**
(21) Numéro de dépôt: 14809469.1
(22) Date de dépôt: 06.11.2014
(51) Int. Cl.: B62D 7/00, B62D 25/08, B62D 21/02, B60G 7/00, B60G 21/055, B62D 21/11, B60G 7/02, B62D 3/12

(54) **STRUCTURE DE BERCEAU DE SUSPENSION DE VÉHICULE**
FAHRZEUGSAUFHÄNGUNGS-HILFSRAHMENSTRUKTUR
SUSPENSION SUBFRAME STRUCTURE OF VEHICLE

(30) Priorité: 28.11.2013 FR 1361799
(43) Date de publication de la demande: 05.10.2016
(73) Titulaire: Renault S.A.S., 92100 Boulogne-Billancourt (FR)
(72) Inventeur: LAVILLUNIERE, Vincent, F-95220 Herblay (FR)
(86) Numéro de dépôt international: PCT/FR2014/052826
(87) Numéro de publication internationale: WO 2015/079136

(56) Documents cités:
- EP-A2- 0 794 106
- FR-A1- 2 295 850
- FR-A1- 2 615 458
- US-A1- 2012 235 397

## Description

### DOMAINE TECHNIQUE DE L'INVENTION

Le domaine technique de l'invention est celui des véhicules automobiles et en particulier des blocs avant de véhicule automobile.

### ETAT DE LA TECHNIQUE ANTERIEURE

Est déjà connue de façon générale, une architecture d'un bloc avant de véhicule, notamment de type traction, avec un groupe motopropulseur transversal comprenant au moins :
- deux longerons formant structure d'accueil, un gauche et un droit, ces longerons supportent une grande partie des organes annexes ;
- un groupe motopropulseur transversal suspendu sur les longerons ;
- un berceau inférieur de train supportant des bras inférieurs de suspension, une crémaillère de direction, et une barre antiroulis.

Dans une telle configuration, le berceau inférieur de train exerce une fonction de mise en géométrie des différents organes constituant le train roulant. En effet sa relative précision de fabrication en comparaison avec celle de la caisse garantit un minimum de dispersion nécessaire au bon fonctionnement du train.

En cas de crash, notamment d'un choc accidentel à l'avant du véhicule, l'énergie introduite dans le véhicule et en partie absorbée par la déformation des différentes pièces de structure du bloc avant comme les longerons. Une autre partie de cette énergie est transmise au restant de la caisse.

Dans ce cas, les voies de passage et d'absorption de cette énergie sont souvent au nombre de deux :
- la voie haute, matérialisée par les longerons ;
- la voie basse, matérialisée soit par un berceau cadre, soit un élément dit « add-on » couplé avec un mini berceau, ladite voie basse étant réalisée par des pièces démontables ne faisant pas partie intégrante de la structure.

Ce schéma structurel correspond à une architecture bien particulière, décrite ci-avant. Toutefois, un tel bloc avant n'est pas toujours le meilleur compromis masse/coût/prestation.

Par exemple, il s'agit ici d'une topologie courante où la crémaillère de direction est en aval de la roue, c'est-à-dire derrière l'axe des roues avant, et en arrière du bras de suspension. Une telle disposition permet d'avoir une compacité verticale importante, tout en offrant une compatibilité cinématique entre longueur de bras et biellette de direction, sur la quasi-totalité du débattement de roue. Toutefois, dans certaine architecture, il devient très difficile pour différentes raisons de faisabilité de positionner la crémaillère de direction en arrière du bras de suspension. Dans ce cas, la crémaillère est au-dessus du bras, voire en avant de ce bras.

Par ailleurs, dans le cas d'une crémaillère de direction devant le bras de suspension, il est quasi impératif pour des raisons de topologie de train de positionner la sortie de crémaillère le plus bas possible vis-à-vis du bras de suspension.

Dans certains cas aussi, la voie basse est réalisée par une structure faisant partie intégrante de la caisse qui ne peut donc être démontée ce qui est contraignant en cas de maintenance. Dans ce cas, et cas de choc notamment, le remplacement des pièces endommagées devient problématique.

Pour ces différentes raisons la cohabitation de la crémaillère de direction et du berceau devient très difficile, voire impossible.

Une solution à ce problème, dans laquelle le berceau est supprimé, est divulguée dans le document EP 0 794 106. Est en particulier décrit un bloc avant d'un véhicule automobile comprenant :
- une poutre transversale formant carter avec une crémaillère de direction ;
- deux supports fixés d'une part à chacune extrémités de la poutre transversale et fixés d'autre part à une structure d'accueil du véhicule ; et
- deux bras de suspension, chacun desdits bras de suspension étant fixé à l'un des supports par l'intermédiaire de deux articulations.
Le document FR 2615458 montre aussi un tel bloc avant.

Toutefois, un tel ensemble présente notamment l'inconvénient de nécessiter l'utilisation de pièces massives, lourdes et couteuses.

Par ailleurs, ces pièces devant être massives, elles jouent un rôle néfaste en cas de crash concernant la capacité d'absorption de l'énergie par les différentes pièces de structure du bloc avant. En effet, et en cas de crash, de telles pièces massives font office de « masque » interdisant le compactage de la structure d'accueil, par exemple des longerons.

Par ailleurs, du fait de cette configuration, il est proposé une crémaillère de direction au-dessus des bras de suspension entre les deux articulations de ces derniers. En aucun cas cette solution ne propose une crémaillère de direction positionnée en avant des bras de suspension.

En outre, une telle configuration de la poutre transversale avec ces supports et ces bras de suspension engendrent une souplesse parasite qui va à l'encontre d'une raideur d'accueil recherchée.

### EXPOSE DE L'INVENTION

Le dispositif décrit par la suite vise à remédier à tout ou partie des inconvénients de l'état de la technique et notamment à réaliser de manière simple et fiable un bloc avant ne nécessitant pas de berceau pour améliorer sa compacité tout en respectant une topologie de train souhaitée, tout en permettant, en cas de choc, une bonne absorption de l'énergie résultante.

Pour ce faire est proposé selon un premier aspect de l'invention un bloc avant d'un véhicule automobile comprenant :
- une poutre transversale formant carter avec une crémaillère de direction et présentant à ses extrémités des excroissances agencées pour être fixées à une structure d'accueil du véhicule ;
- deux bras de suspension, chacun positionné à l'une des extrémités de la poutre transversale, et présentant chacun au moins une première et une deuxième articulations,
le bloc avant étant caractérisé entre autre en ce que la poutre transversale comprend une interface de fixation pour recevoir une seule articulation de chacun des bras de suspension.

Un tel bloc avant, dans lequel les bras de suspension sont reliés à la poutre transversale par une unique articulation permet de réduire son encombrement et donc de favoriser le compactage de la structure d'accueil du véhicule, donc sa capacité à absorber une énergie résultante d'un choc, par exemple lors d'un accident.

Cette structure d'accueil peut être formée par exemple de longerons ou encore comporter des rehausses.

Selon une caractéristique particulière, chacun des bras de suspension comprend :
- la première articulation fixée à l'interface de fixation; et
- la deuxième articulation fixée à la structure d'accueil du véhicule.

Dans une telle configuration, seule l'articulation fixée à l'interface de fixation nécessite un assemblage précis. Cette précision étant nécessaire pour diminuer la dispersion cinématique entre les pièces. Ainsi la deuxième articulation fixée à la structure d'accueil ne nécessite pas un positionnement aussi précis.

Le cout de fabrication est donc diminué et la raideur d'accueil améliorée de même que la sécurité.

Avantageusement, les bras de suspension sont situés à un niveau horizontal au plus proche du niveau de la crémaillère de direction. Ce principe physique peut s'appliquer à tout type de topologie constituée de bras de suspension et de crémaillère de direction et biellette.

Avantageusement encore, le bloc avant comprend une partie avant destinée à être dirigée vers l'avant d'un véhicule et une partie arrière destinée à être dirigée vers l'arrière du véhicule, la crémaillère de direction étant situé à l'avant par rapport aux bras de suspension. Cette configuration permet une compacité du bloc avant. Elle est la conséquence de la réduction de la distance entre l'axe d'essieu avant et la position du conducteur. Elle permet de faciliter l'organisation de colonne de direction, du pédalier, et de l'ergonomie du poste de conduite. En effet, la crémaillère, à l'extrémité de la colonne de direction, est avancée (et le conducteur également, par rapport à l'axe de l'essieu avant). Elle finit donc devant le bras de suspension qui lui ne bouge pas par rapport à la roue. La présente invention permet donc la faisabilité de cette compacité et valorise cette nouvelle position de crémaillère. Cette innovation peut s'appliquer à tout type de train avant à roues indépendantes : Pseudo Mac-Pherson classique, Pseudo Mac-Pherson à pivot semi-fictif (bras inférieur constitué de deux bielles), double triangulés, double triangulé a pivot semi-fictif ou fictif, train a pivot indépendant, etc....

Selon une autre caractéristique technique, la première articulation est située à l'avant par rapport à la deuxième articulation. La première articulation désigne donc une articulation antérieure et la deuxième articulation, une articulation postérieure.

Dans une telle configuration, la capacité d'absorption d'énergie en cas de choc est améliorée.

Dans une configuration particulière, chacune des deuxièmes articulations est fixée à une chape, ladite chape étant soudée à la structure d'accueil.

De préférence, les première et deuxième articulations comprennent des paliers pour assurer leur mouvement de rotation, de préférence un mouvement de rotation horizontale.

Selon un avantage particulier, la crémaillère de direction est portée par un barreau de crémaillère, ledit barreau de crémaillère de direction étant guidé dans le carter par des flasques.

De préférence, deux flasques sont prévus, chacun étant positionné à l'une des extrémités de la poutre, de préférence encore dans une partie tubulaire de chacune des excroissances, et chacun portant un guide-palier traversé par le barreau de crémaillère pour lier ledit barreau de crémaillère au flasque et ainsi le guider dans son mouvement de translation transversal.

Dans un mode de réalisation particulier, ces flasques sont fixés à la poutre formant carter par vissage, notamment au moyen d'une pluralité de vis.

Le bloc avant comprend par ailleurs un pignon de direction porté par une colonne de direction, le pignon de direction étant guidé dans le carter par un roulement et une cage à aiguilles.

Des soufflets de direction peuvent être prévus pour assurer l'étanchéité entre la poutre formant carter et des biellettes de directions situées aux extrémités du barreau de la crémaillère de direction. De préférence, chacun de ces soufflets est emmanché sur l'un des flasques et, est maintenu solidaire de la poutre formant carter au moyen d'un collier de fixation fixé à ladite poutre formant carter, de préférence par vissage du collier dans l'une des excroissances.

Pour faciliter la fixation des soufflets à la poutre transversale, une ou plusieurs fenêtres peuvent être prévues localement sur une paroi des excroissances. Le serrage du collier de fixation du soufflet sera alors facilité et amélioré et la matière formant poutre sera économisée.

Selon une configuration technique particulière, le bloc avant comprend une barre antiroulis. Cette barre antiroulis permet de stabiliser le véhicule en réduisant les effets des virages et les irrégularités de la route améliorant donc la tenue de route.

Avantageusement, cette barre antiroulis est fixée au carter au moyen de colliers de maintien pour maintenir la barre antiroulis sur des paliers fixés, de préférence par vissage, sur les excroissances du carter.

Avantageusement encore, le carter est monobloc. Cela présente en particulier l'avantage d'améliorer la rigidité de l'ensemble en évitant toute souplesse parasite et donc d'améliorer la tenue mécanique des différentes pièces.

Est également proposé selon un autre aspect de l'invention, un véhicule automobile caractérisé en ce qu'il comprend un bloc avant présentant tout ou partie des caractéristiques précitées.

L'invention est décrite dans ce qui précède à titre d'exemple. Il est entendu que l'homme du métier est à même de réaliser différentes variantes de réalisation de l'invention, par exemple en associant différentes caractéristiques prises seules ou en combinaison en fonction de son besoin, sans pour autant sortir du cadre de l'invention.

### BREVE DESCRIPTION DES FIGURES

D'autres caractéristiques et avantages de l'invention ressortiront à la lecture de la description qui suit, donnée uniquement à titre d'exemple, en référence aux figures annexées, qui illustrent :
- figure 1, un schéma de l'avant d'un véhicule ;
- figures 2A et 2B, deux vues en perspective de dessous et de dessus d'une poutre transversale fixée à une structure d'accueil selon un mode de réalisation ;
- figure 3, une vue en perspective en partie éclatée d'une poutre transversale et d'une structure d'accueil selon ce mode de réalisation ;
- figure 4, une vue en perspective d'un bras oscillant fixée à une poutre et à uns structure d'accueil d'un véhicule selon ce mode de réalisation ;
- figure 5, une vue en perspective d'une poutre selon ce mode de réalisation ;
- figures 6A et 6B, deux vues en coupe d'une poutre formant carter d'une crémaillère de direction selon ce mode de réalisation et d'un moyen de guidage de ladite crémaillère de direction selon un mode de réalisation ;
- figure 7, une vue en perspective éclatée d'une poutre transversale selon ce mode de réalisation.

Pour plus de clarté, les éléments identiques ou similaires sont repérés par des signes de référence identiques sur l'ensemble des figures.

### DESCRIPTION DETAILLEE D'UN MODE DE REALISATION

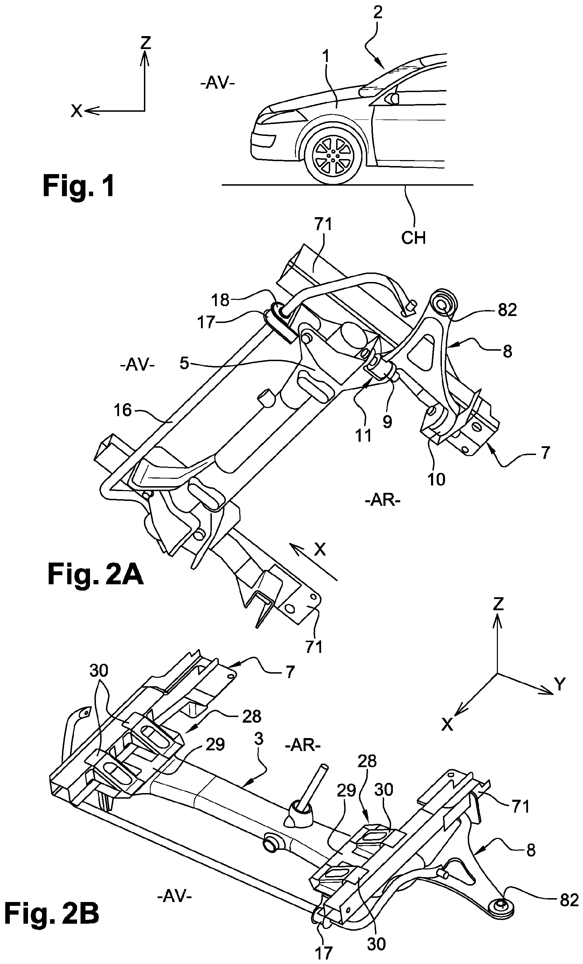

La figure 1 illustre un schéma d'une partie avant d'un véhicule 2 automobile munie d'un bloc avant 1, ledit véhicule 2 automobile roulant sur une chaussée CH selon une direction longitudinale X. La chaussée CH définit un plan horizontal et un axe vertical Z est définit comme étant perpendiculaire à ce plan horizontal.

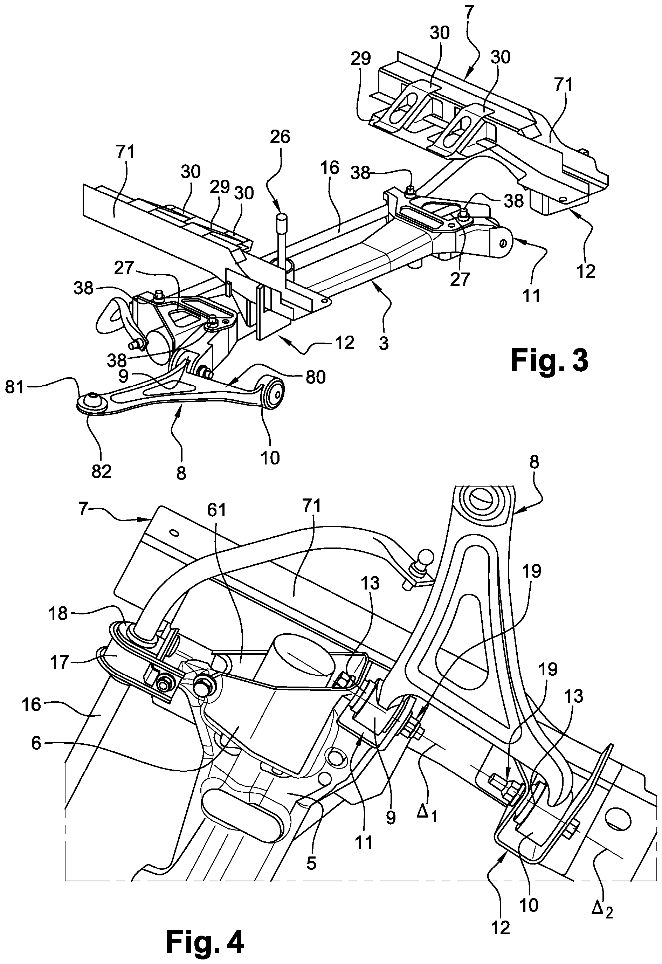

Les figures 2A, 2B, 3 et 4 illustrent une poutre 3 transversale et d'une structure d'accueil 7 d'un véhicule 2 automobile.

En particulier, la structure d'accueil 7 comprend ici deux longerons 71 sensiblement parallèles et dirigés suivant un axe longitudinal X par rapport au véhicule 2 automobile.

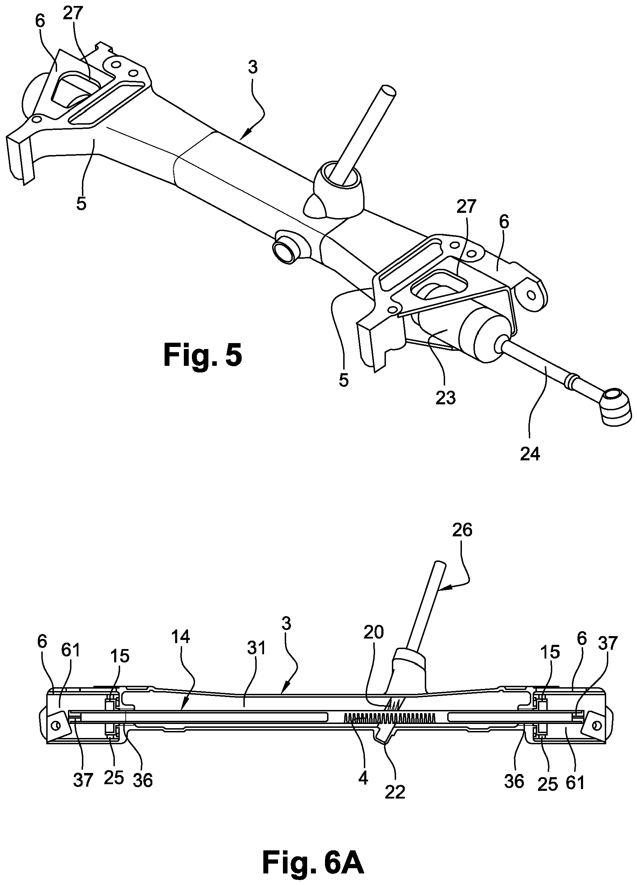

La poutre 3 transversale est ici formée monobloc, c'est-à-dire en un seul tenant, de sorte à diminuer les souplesses parasites lors de l'utilisation du véhicule 2 et forme en outre un carter avec une crémaillère de direction 4. La poutre 3 s'étend, dans une position fixée à la structure d'accueil 7, entre les deux longerons 71 et suivant un axe transversal Y du véhicule 2, lequel axe Y est orthogonal auxdits deux longerons 71. La poutre 3 transversale présente une partie médiane tubulaire 31 (voir figure 6A) ouverte à ses extrémités et à l'intérieur de laquelle est disposée ladite crémaillère de direction 4.

La poutre 3 transversale présente à ses extrémités 5 des excroissances 6 agencées pour être fixées à la structure d'accueil 7 du véhicule 2 et assurer ainsi la liaison mécanique entre la poutre 3 et les longerons 71. Ces excroissances 6 s'étendent sensiblement dans le prolongement de la poutre 3 et présentent également une portion 61 sensiblement tubulaire délimitant un espace intérieur, cet espace intérieur étant en communication avec l'intérieur de la partie médiane tubulaire 31.

Le bloc avant 1 comprend deux bras de suspension 8, chacun desdits bras étant positionné à l'une des extrémités 5 de la poutre 3 transversale, et présentant chacun au moins une première 9 et une deuxième 10 articulations.

Dans les figures, il n'est représenté qu'un seul bras de suspension 8 de sorte à améliorer la lisibilité des figures.

Les bras de suspension 8 assurent une liaison entre des masses non suspendues du véhicule, telles que des roues du véhicule, et des masses suspendues telles que sa caisse. Ces bras de suspension 8 forment, en général, en combinaison avec un ressort et un amortisseur (non illustrés sur les figures), la suspension du véhicule.

Plus précisément, chacun des bras de suspension 8 comprend pour sa fixation avec les masses non suspendues du véhicule 2 :
- une première articulation 9 fixée à une interface 11 de fixation de la poutre 3 transversale ; et
- une deuxième articulation 10 fixée à la structure d'accueil 7 du véhicule 2 ;
la poutre 3 transversale étant liée aux bras de suspension 8 par une interface 11 de fixation pour recevoir une seule articulation de chacun des bras de suspension 8.

Ces bras de suspension forment sensiblement des triangles dont la base 80 porte les première et deuxième articulations 9, 10 et dont est située au sommet 81 une rotule 82 de fixation pour sa solidarisation avec des masses suspendues du véhicule 2, par exemple avec un porte-fusées lui-même en liaison avec un moyeu de l'une des roues du véhicule 2.

Par ailleurs, le bloc avant 1 comprend une partie avant AV destinée à être dirigée vers l'avant du véhicule 2 et une partie arrière AR destinée à être dirigée vers l'arrière du véhicule 2 selon son axe longitudinal X, la première articulation 9 étant située à l'avant par rapport à la deuxième articulation 10 de sorte que la première articulation 9 définit une articulation antérieure et la deuxième articulation 10 une articulation postérieure.

L'interface 11 de fixation présente sensiblement une section en forme de U comprenant deux parois de fixation entre lesquelles vient se placer la première articulation 9. Cette forme en U est sensiblement orientée dans la direction transversale Y et ouverte à l'opposée de la partie médiane tubulaire 31 de la poutre 3, c'est-à-dire vers l'extérieur par rapport à la poutre 3 transversale.

Cette première articulation 9 porte un palier 13 et est fixée à l'interface 11 de fixation par un ensemble vis/écrou 19 traversant au moins les deux parois de fixation et le palier 13, la vis formant localement arbre de rotation de la première articulation 9 par rapport à la poutre 3 transversale autour d'un axe Δ₁ contenu dans un plan parallèle au plan horizontal et sensiblement parallèle à l'axe longitudinal X du véhicule.

Dans ce mode de réalisation, l'interface de fixation 11 est portée par l'excroissance 6 de la poutre 3 et placée derrière elle par rapport à l'axe longitudinal X.

De même, chacune des deuxièmes articulations 10 des bras de suspension 3 est fixée à une chape 12, ladite chape 12 étant soudée à la structure d'accueil 7.

De la même façon que les interfaces 11 de fixation solidaires des excroissances 6 aux extrémités 5 de la poutre 3 transversale, les chapes 12 présentent également sensiblement une section en forme de U comprenant deux parois de fixation entre lesquelles vient se placer la deuxième articulation 10.

Cette forme en U est également orientée dans la direction transversale Y et vers l'extérieur par rapport à la structure d'accueil 7.

Un autre palier 13 est prévu à chacune des deuxièmes articulations 10, de sorte que ces deuxièmes articulations 10 sont chacune maintenues en rotation par rapport à la structure d'accueil 7 au moyen d'un autre ensemble vis/écrou 19 traversant au moins les deux parois de fixation de la chape 12 et cet autre palier 13 formant arbre de rotation autour d'un axe Δ₂.

Dans une configuration assemblée, les première et deuxième articulations 9, 10 forment chacune liaison pivot avec la poutre 3 et la structure d'accueil 7, respectivement. Les bras de suspension 8 sont donc chacun en liaison pivot d'axe parallèle à l'axe longitudinale X.

L'axe Δ₂ de rotation de la deuxième articulation 10 par rapport à la structure d'accueil 7 est parallèle et plus précisément colinéaire à l'axe Δ₁ de rotation de la première articulation 9 du même bras de suspension 8 par rapport à la poutre 3 transversale, ces axes Δ₁ et Δ₂ étant dans le prolongement l'un de l'autre et par conséquent confondus en un seul et même axe de rotation. Toutefois, dans d'autres configurations, ces axes de rotation Δ₁, Δ₂ peuvent être décalés tout en restant parallèles entre eux. Par ailleurs, par rapport à la structure d'accueil 7, et notamment par rapport aux longerons 71, ou au plan formé par les longerons 71, et en fonction des différents compromis performance/coût/prestation, les axes de rotation Δ₁, Δ₂ peuvent être dans d'autres orientations relatives par rapport au plan formé par lesdits longerons 71, voir orthogonaux. Par exemple la première ou deuxième articulation 9, 10 peut être à axe vertical.

Dans une position fixée, les bras de suspension 8 sont situés à un niveau horizontal au dessus d'un niveau de la crémaillère de direction 4. En d'autres termes les bras de suspension présentent une hauteur suivant l'axe vertical Z plus grande que la hauteur de la crémaillère de direction 4.

En outre dans ce mode de réalisation, la crémaillère de direction 4 est agencée de sorte qu'elle est située à l'avant par rapport aux bras de suspension 8.

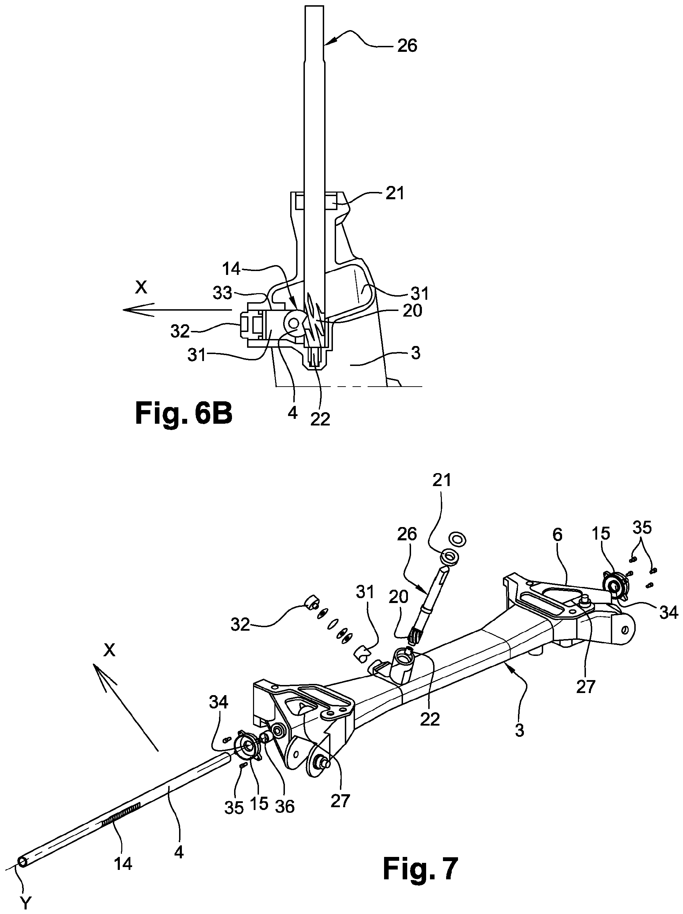

Plus précisément, et comme illustré en détail figures 5, 6A et 6B, la crémaillère de direction 4 est portée par un barreau 14 de crémaillère, ledit barreau 14 de crémaillère de direction 4 étant guidé dans le carter par deux flasques 15.

Chacun de ces deux flasques est situé à l'une des extrémités 5 de la poutre 3 transversale, à l'intérieur de la partie tubulaire 61 de chacune des excroissances 6. Les flasques 15 présentent chacun un orifice 34 de guidage agencé pour être traversé par le barreau 14 de la crémaillère de direction, lesdits flasques étant placés coaxialement par rapport à l'axe transversal Y. Ces flasques 15 sont fixés à la poutre 3 transversale par quatre vis 35 uniformément réparties autour de la forme de révolution du flasque 15.

En particulier, chacun des espaces intérieurs des portions 61 tubulaires des excroissance 6 communique avec l'espace intérieur de la partie médiane tubulaire par une portion cylindrique renferment une bague 36 formant palier lisse, cette bague 36 étant maintenue dans cette portion cylindrique, et en butée selon l'axe transversal Y :
- d'un côté, contre une partie de la portion cylindrique présentant localement une section de diamètre réduit, et ;
- de l'autre côté, contre l'un des flasques 15.

Le barreau 14 de crémaillère de direction 4 est ainsi en liaison glissière selon l'axe transversal Y, sa translation étant guidée par les flasques 15 et commandée par un pignon de direction 20 porté par une colonne de direction 26. Ledit pignon de direction 20 est guidée dans la poutre 3 formant carter par un roulement 21 et une cage à aiguilles 22. Le roulement 21 et la cage à aiguilles 22 sont maintenus directement dans un logement de ladite poutre 3 (voir figure 6B).

Pour maintenir la liaison mécanique entre le pignon de direction 20 et la crémaillère de direction 4, il est prévu un poussoir 31 exerçant une pression sur le barreau 14 de crémaillère à l'opposé de la liaison, et une vis poussoir 32 permettant de maintenir le poussoir 31 en contact et en butée contre ledit barreau 14.

La vis poussoir 32 et le poussoir 31 sont maintenus dans un orifice 33 de la poutre 3 formant carter, cet orifice formant communication entre l'espace intérieur de la partie médiane tubulaire 31 dans laquelle est logée la crémaillère 4 de direction et un espace extérieur. Cet orifice est orienté sensiblement radialement par rapport à l'axe transversale Y et de préférence sensiblement suivant l'axe longitudinal X.

Ainsi, la transmission du mouvement imprimé par le conducteur se fait sur la colonne de direction 26 fixée au centre d'un volant de commande, laquelle colonne de direction 26 entraine la crémaillère de direction 4 en translation suivant l'axe transversal Y par la rotation du pignon de direction 20, ledit barreau de direction 14 transmettant alors le couple à des biellettes de direction 24 situées aux extrémités de la crémaillère de direction 4 et agissant directement sur les roue.

Aux deux extrémités du barreau 14 de direction sont prévus des butées de fin de course 37.

Deux soufflets de direction 23 sont prévus pour assurer l'étanchéité entre la poutre 3 et les biellettes de direction 24, chacun des deux soufflets 23 étant emmanché sur l'un des flasques 15. Plus précisément, les soufflets sont maintenus solidaires de la poutre 3 au moyen d'un collier de fixation 25 fixé à ladite poutre 3 par vissage dudit collier 25 sur l'une des excroissances 6.

Une fenêtre 27 aménagée dans chacune des excroissances 6 est ici prévue pour faciliter l'accès aux moyens de fixations des soufflets avec la poutre 3. Chacune des fenêtres 27 est ici ouverte verticalement sur une paroi la plus haute verticalement de ladite excroissance 6 associée, ceci afin de faciliter un accès supérieur.

Par ailleurs, la poutre 3 est maintenue solidaire fixement par rapport à la structure d'accueil 7 au moyen d'éléments de liaison 28. En effet, chacun des longerons 71 présente une plateforme 29 s'étendant vers un espace intérieur délimité par les deux longerons 71, cette plateforme 29 étant fixée auxdits longerons par soudure avec un élément intermédiaire 30 formant équerre, lequel élément intermédiaire est soudé audit longeron 71 associé.

Dans ce mode de réalisation, la poutre 3 transversale formant carter est fixée aux moyen de vis 38 traversant ladite poutre 3 transversale pour se visser dans la plateforme 30 de la structure d'accueil 7.

Par ailleurs, le bloc avant comprend une barre antiroulis 16 de sorte à limiter le roulis du véhicule 2 en assurant une connexion souple entre les composants gauche et droit du train.

En particulier, la barre antiroulis 16 est fixée à la poutre 3 transversale formant carter au moyen de colliers 17 de maintien pour maintenir la barre antiroulis 16 sur des paliers 18 fixés par vissage sur les excroissances 5 de la poutre 3. En d'autres termes, ces paliers 18 sont maintenus par les colliers 17, les colliers 17 étant vissés directement dans la poutre 3 formant carter. Des faces d'accueil recevant ces colliers 17 sont formées d'un seul tenant avec les excroissances 6 de ladite poutre 3.

Un bloc avant tel que décrit ci-avant permet donc :
- de valoriser la poutre transversale formant carter pour assurer le maintien des articulations antérieures des bras de suspension améliorant la compacité et la simplicité de la structure du bloc avant ;
- de valoriser la poutre transversale formant carter pour assurer le maintien de la barre antiroulis améliorant également la compacité et la simplicité de la structure du bloc avant ;
- de permettre le positionnement de la crémaillère de direction en amont du bras de suspension ;
- de permettre le positionnement de l'axe de la crémaillère dans le plan du bras de suspension ou même à une hauteur plus faible en fonction de la topologie du train souhaitée ;
- de réduire le masque indéformable en cas de crash et de permettre l'absorption d'énergie plus efficacement par la déformation de la structure d'accueil ;
- d'éviter des pièces massives et couteuses en matériaux onéreux en assurant une structure plus compacte, légère et moins onéreuse ; et
- d'avoir une raideur d'accueil de l'articulation postérieure plus importante améliorant la résistance de la structure et donc la sécurité du véhicule.

L'invention est décrite dans ce qui précède à titre d'exemple. Il est entendu que l'homme du métier est à même de réaliser différentes variantes de réalisation de l'invention sans pour autant sortir du cadre de l'invention définie par les revendications.

## Revendications

1. Bloc avant (1) d'un véhicule (2) automobile comprenant :
- une poutre (3) transversale formant carter avec une crémaillère de direction (4) et présentant à ses extrémités (5) des excroissances (6) agencées pour être fixées à une structure d'accueil (7) du véhicule (2) ;
- deux bras de suspension (8), chacun positionné à l'une des extrémités (5) de la poutre (3) transversale, et présentant chacun au moins une première (9) et une deuxième (10) articulations, chacun des bras de suspension (8) étant relié à la poutre (3) transversale par une seule articulation (9), laquelle est reçue par une interface de fixation (11) associée ;
le bloc avant (1) étant caractérisé en ce comprend une partie avant (AV) destinée à être dirigée vers l'avant du véhicule (2) et: une partie arrière (AR) destinée à être dirigée vers l'arrière du véhicule (2), la crémaillère de direction (4) étant située à l'avant par rapport aux bras de suspension (8).

2. Bloc avant (1) selon la revendication 1, **caractérisé en ce que** chacun des bras de suspension (8) comprend :
- la première articulation (9) fixée à l'interface (11) de fixation ; et
- la deuxième articulation (10) fixée à la structure d'accueil (7) du véhicule (2).

3. Bloc avant (1) selon la revendication 1 ou 2, **caractérisé en ce que** les bras de suspension (8) sont situés à un niveau horizontal au plus proche du niveau de la crémaillère de direction (4).

4. Bloc avant (1) selon l'une quelconque des revendications précédentes, **caractérisé en ce que** la première articulation (9) est située à l'avant par rapport à la deuxième articulation (10).

5. Bloc avant (1) selon l'une quelconque des revendications précédentes, **caractérisé en ce que** chacune des deuxièmes articulations (10) est fixée à une chape (12), ladite chape (12) étant soudée à la structure d'accueil (7).

6. Bloc avant (1) selon l'une quelconque des revendications précédentes, **caractérisé en ce que** les première et deuxième articulations (9, 10) comprennent des paliers (13) pour assurer leur mouvement de rotation.

7. Bloc avant (1) selon l'une quelconque des revendications précédentes, **caractérisé en ce que** la crémaillère de direction (4) comprend un barreau (14) de crémaillère, ledit barreau (14) de crémaillère de direction (4) étant guidé dans la poutre formant carter par des flasques (15).

8. Bloc avant (1) selon l'une quelconque des revendications précédentes, **caractérisé en ce qu'**il comprend une barre antiroulis (16).

9. Bloc avant (1) selon la revendication précédente, **caractérisé en ce que** la barre antiroulis (16) est fixée à la poutre transversale (3) formant carter au moyen de colliers (17) de maintien pour maintenir la barre antiroulis (16) sur des paliers (18) fixés, de préférence par vissage, sur les excroissances (5) de la poutre (3).

10. Bloc avant (1) selon l'une quelconque des revendications précédentes, **caractérisé en ce que** la poutre (3) transversale formant carter est monobloc.

11. Véhicule (2) automobile **caractérisé en ce qu'**il comprend un bloc avant (1) selon l'une quelconque des revendications précédentes.

## Patentansprüche

1. Vorderer Block (1) eines Kraftfahrzeugs (2), der Folgendes umfasst:
- einen Querträger (3), der mit einer Lenkungszahnstange (4) ein Gehäuse bildet und an seinen Enden (5) Ausstülpungen (6) aufweist, die eingerichtet sind, um an einer Aufnahmestruktur (7) des Fahrzeugs (2) befestigt zu sein;
- zwei Aufhängungsarme (8), die jeweils an einem der Enden (5) des Querträgers (3) positioniert sind und jeweils mindestens eine erste (9) und eine zweite Anlenkung (10) aufweisen, wobei jeder der Aufhängungsarme (8) mit dem Querträger (3) durch eine einzige Anlenkung (9), die von einer dazugehörenden Befestigungsschnittfläche (11) aufgenommen wird, verbunden ist;
wobei der vordere Block (1) **dadurch gekennzeichnet ist, dass** er einen vorderen Teil (AV) umfasst, der dazu bestimmt ist, zur Vorderseite des Fahrzeugs (2) gerichtet zu sein, und einen hinteren Teil (AR), der dazu bestimmt ist, zur Rückseite des Fahrzeugs (2) gerichtet zu sein, wobei sich die Lenkungszahnstange (4) in Bezug auf die Aufhängungsarme (8) an der Vorderseite befindet.

2. Vorderer Block (1), nach Anspruch 1, **dadurch gekennzeichnet, dass** jeder der Aufhängungsarme (8) Folgendes umfasst:
- die erste Anlenkung (9), die an der Befestigungsschnittfläche (11) befestigt ist; und
- die zweite Anlenkung (10), die an der Aufnahmestruktur (7) des Fahrzeugs (2) befestigt ist.

3. Vorderer Block (1) nach Anspruch 1 oder 2, **dadurch gekennzeichnet, dass** die Aufhängungsarme (8) an einem horizontalen Niveau liegen, das dem Niveau der Lenkungszahnstange (4) am nächsten liegt.

4. Vorderer Block (1) nach einem der vorhergehenden Ansprüche, **dadurch gekennzeichnet, dass** die erste Anlenkung (9) in Bezug auf die zweite Anlenkung (10) vorn liegt.

5. Vorderer Block (1) nach einem der vorhergehenden Ansprüche, **dadurch gekennzeichnet, dass** jede der zwei Anlenkungen (10) an einer Gabel (12) befestigt ist, wobei die Gabel (12) an die Empfangsstruktur (7) geschweißt ist.

6. Vorderer Block (1) nach einem der vorhergehenden Ansprüche, **dadurch gekennzeichnet, dass** die erste und die zweite Anlenkung (9, 10) Lager (13) umfassen, um ihre Rotationsbewegung sicherzustellen.

7. Vorderer Block (1) nach einem der vorhergehenden Ansprüche, **dadurch gekennzeichnet, dass** die Lenkungszahnstange (4) einen Zahnstangenstab (14) umfasst, wobei der Zahnstangenstab (14) der Lenkung (4) durch Flansche (15) in dem Träger, der ein Gehäuse bildet, geführt ist.

8. Vorderer Block (1) nach einem der vorhergehenden Ansprüche, **dadurch gekennzeichnet, dass** er eine Stabilisatorstange (16) umfasst.

9. Vorderer Block (1) nach dem vorhergehenden Anspruch, **dadurch gekennzeichnet, dass** die Stabilisatorstange (16) an dem Querträger (3), der ein Gehäuse bildet, mittels Halteschellen (17) zum Halten der Stabilisatorstange (16) auf Lagern (18), bevorzugt durch Verschrauben, auf den Ausstülpungen (5) des Querträgers (3) befestigt sind.

10. Vorderer Block (1) nach einem der vorhergehenden Ansprüche, **dadurch gekennzeichnet, dass** der Querträger (3), der ein Gehäuse bildet, einstückig ist.

11. Kraftfahrzeug (2), **dadurch gekennzeichnet, dass** es mindestens einen vorderen Block (1) nach einem der vorhergehenden Ansprüche umfasst.

## Claims

1. Front unit (1) of a motor vehicle (2), comprising:
- a transverse beam (3) forming a casing with a steering rack (4) and having at its ends (5) protuberances (6) arranged to be fixed to a receiving structure (7) of the vehicle (2);
- two suspension arms (8), each positioned at one of the ends (5) of the transverse beam (3) and each having at least one first (9) and one second (10) pivot joint, each of the suspension arms (8) being connected to the transverse beam (3) by a single pivot joint (9), which pivot joint is received by an associated fixing interface (11);
the front unit (1) being **characterized in that** it comprises a front part (AV) intended to be directed towards the front of the vehicle (2), and a rear part (AR) intended to be directed towards the rear of the vehicle (2), the steering rack (4) being situated at the front relative to the suspension arms (8).

2. Front unit (1) according to Claim 1, **characterized in that** each of the suspension arms (8) comprises:
- the first pivot joint (9) fixed to the fixing interface (11); and
- the second pivot joint (10) fixed to the receiving structure (7) of the vehicle (2).

3. Front unit (1) according to Claim 1 or 2, **characterized in that** the suspension arms (8) are situated at a horizontal level as close as possible to the level of the steering rack (4).

4. Front unit (1) according to one of the preceding claims, **characterized in that** the first pivot joint (9) is situated at the front relative to the second pivot joint (10).

5. Front unit (1) according to any of the preceding claims, **characterized in that** each of the second pivot joints (10) is fixed to a cap (12), said cap (12) being welded to the receiving structure (7).

6. Front unit (1) according to any of the preceding claims, **characterized in that** the first and second pivot joints (9, 10) comprise bearings (13) to ensure their rotational movement.

7. Front unit (1) according to any of the preceding claims, **characterized in that** the steering rack (4) comprises a rack bar (14), said bar (14) of the steering rack (4) being guided by flanges (15) in the beam forming the casing.

8. Front unit (1) according to any of the preceding claims, **characterized in that** it comprises an anti-roll bar (16).

9. Front unit (1) according to the preceding claim, **characterized in that** the anti-roll bar (16) is fixed to the transverse beam (3) forming the casing by means of support collars (17) for holding the anti-roll bar (16) on bearings (18) which are fixed, preferably by bolting, to the protuberances (5) of the beam (3).

10. Front unit (1) according to any of the preceding claims, **characterized in that** the transverse beam (3) forming the casing is made of one piece.

11. Motor vehicle (2), **characterized in that** it comprises a front unit (1) according to any of the preceding claims.
